# EUROPÄISCHE PATENTSCHRIFT

(11) **EP 3 895 921 B1**
(45) Veröffentlichungstag und Bekanntmachung des Hinweises auf die Patenterteilung: **14.06.2023**
(21) Anmeldenummer: 21167138.3
(22) Anmeldetag: 07.04.2021
(51) Int. Cl.: B60H 1/03, B60H 1/00

(54) **HEIZ- UND/ODER KLIMAANLAGE MIT VERBESSERTER LUFTBEHANDLUNG UND VERFAHREN DAZU**
HEATING AND / OR AIR CONDITIONING SYSTEM WITH IMPROVED AIR TREATMENT AND METHOD FOR SAME
INSTALLATION DE CHAUFFAGE ET/OU DE CLIMATISATION À TRAITEMENT AMÉLIORÉ DE L'AIR ET PROCÉDÉ ASSOCIÉ

(30) Priorität: 18.04.2020 DE 102020110602
(43) Veröffentlichungstag der Anmeldung: 20.10.2021
(73) Patentinhaber: Konvekta Aktiengesellschaft, 34613 Schwalmstadt-Ziegenhain (DE)
(72) Erfinder: Sonnekalb, Michael, 34613 Schwalmstadt (DE); Fink, Sebastian, 34613 Schwalmstadt-Ziegenhain (DE)
(74) Vertreter: Lindinger, Bernhard

(56) Entgegenhaltungen:
- WO-A1-2018/162016
- FR-A1- 2 189 695
- JP-A- 2000 289 455
- JP-A- 2010 076 506
- JP-A- 2019 081 460

## Beschreibung

### Gebiet der Technik:

Die Erfindung betrifft eine Heiz- und/oder Klimaanlage für ein Fahrzeug gemäß dem Oberbegriff des Anspruchs 1. Sie umfasst mindestens eine Frischluftzufuhrleitung zum Leiten von Frischluft für einen Fahrzeuginnenraum, wenigstens ein zumindest zum Fördern von Frischluft durch mindestens eine der wenigstens einen Frischluftzufuhrleitung angeordnetes Gebläse, mindestens eine Abluftleitung zum Leiten von Abluft aus einem Fahrzeuginnenraum und wenigstens eine Abluftfördereinrichtung, die zum Fördern von Abluft durch zumindest eine der wenigstens einen Abluftleitung und nach außen in die Umgebung angeordnet ist.

Insbesondere für Omnibusse und Schienenfahrzeuge werden diese Heiz- und/oder Klimaanlagen verwendet.

Ferner betrifft die Erfindung ein Fahrzeug mit so einer Heiz- und/oder Klimaanlage und ein Verfahren zum Steuern der Anlage.

### Stand der Technik:

Bekannt sind Heiz- und/oder Klimaanlagen für Fahrzeuge, bei denen die Frischluftzufuhrleitung in eine Mischkammer zum Mischen der Frischluft mit der Umluft führt und ein Gebläse die Frischluft und die Umluft so gemeinsam weiter in den Fahrzeuginnenraum fördert und die Abluft durch eine Abluftleitung aus dem Fahrzeuginnenraum mithilfe einer Abluftfördereinrichtung nach außen in die Umgebung geblasen wird. Jedoch entweicht dabei die vorher erwärmte oder abgekühlte Abluft ungenutzt in die Umgebung. Ihre durch vorherigen Energieaufwand erfolgte Erwärmung oder Abkühlung kommt der weiteren Luftbehandlung für den Fahrzeuginnenraum nicht mehr zugute. In EP0736402A2 ist eine Ausführungsform einer Heiz- und Klimaanlage offenbart, bei der die Nutzung der Wärme der Abluft im Heizbetrieb und der Kälte der Abluft im Kühlbetrieb über einen in der Abluftleitung stromaufwärts der Abluftfördereinrichtung angeordneten Wärmetauscher erfolgt, in dem Wärme zwischen der Abluft und einer Heiz-/Kühlflüssigkeit eines Sekundärkreises getauscht wird. Über einen weiteren Wärmetauscher im Sekundärkreis gibt dabei die Heiz-/Kühlflüssigkeit die aufgenommene Wärme oder Kälte an das Kältemittel eines primären Kältemittelkreislaufs ab, wodurch dessen Effizienz erhöht wird. In einem Kältemittelkreislauf sind üblicherweise im Kreislauf Verdichter, Kondensator/Gaskühler, Expansionsorgan und Verdampfer in Strömungsrichtung des darin zirkulieren Kältemittels über Kältemittelleitungen verbunden. Jedoch erfolgt die Nutzung der Wärme oder Kälte der Abluft bei der in EP0736402A2 gezeigten Ausführungsform nur mittelbar über einen Sekundärkreis mit nachteilig entsprechendem Material- und Kostenaufwand sowie Effizienzeinbuße. Bei einer in DE102013008491A1 offenbarten Ausführungsform einer Heiz- und/oder Klimaanlage für ein Fahrzeug vollzieht sich die Nutzung der Wärme oder Kälte der Abluft ohne Zwischenschaltung eines Sekundärkreises direkter über einen im Abluftstrom stromaufwärts der Abluftfördereinrichtung angeordneten Wärmetauscher, bei dem Wärme zwischen Abluft und dem Kältemittel des Kältemittelkreislaufs ausgetauscht wird und so die Effizienz des Kältemittelkreislaufs erhöht. Aber auch dabei erfolgt die Nutzung der Wärme oder Kälte der Abluft für die Luftbehandlung für einen Fahrzeuginnenraum indirekt mittelbar über den Kältemittelkreislauf, was insbesondere nachteilig hinsichtlich Effizienz und Materialaufwand ist. Der Kältemittelkreislauf muss dabei durch den Wärmetauscher in der Abluftleitung geführt sein, was eine Einschränkung hinsichtlich seiner Position sowie der Führung seiner Kältemittelleitungen zur Folge hat.

In den WO2014/009922A1, CN210083216U, JP2015-051680A, JP2012-1037A und JPS58-63509A offenbarten Anlagen zur Luftbehandlung bei einem Fahrzeug sind zwar Luft-Luft-Wärmetauscher für einen Wärmetausch zwischen Frischluft und Abluft vorhanden, aber die sonstige Behandlung von Frischluft und Umluft zeigt Schwächen. In JPS58-63509A ist bis zum Eintritt von Frischluft in den Fahrgastraum für die Erwärmung oder Abkühlung der Frischluft lediglich der Luft-Luft-Wärmetauscher vorgesehen, in WO2014/009922A1 und CN210083216U sind für die Umluft keine Wärmetauscher gezeigt und in JP2015-051680A sowie JP2012-1037A wird die Umluft nur mit auch für Frischluft vorgesehenen Wärmetauschern gekühlt oder geheizt. In JP2019-81460A ist eine Heiz- und/oder Klimaanlage für ein Fahrzeug offenbart, die Frischluft, Umluft und Abluft behandelt. Die dort im Luftbehandlungsbereich angeordneten Verdampfer und Kondensator sind jeweils sowohl für die Behandlung von Frischluft als auch von Umluft vorgesehen.

Der im Anspruch 1 angegebenen Erfindung liegt also das Problem zugrunde, eine hinsichtlich der Luftbehandlung, wie insbesondere der Nutzung der Abluft sowie der Behandlung von Frischluft und Umluft, verbesserte Heiz- und/oder Klimaanlage bereitzustellen.

Ein entsprechendes Problem liegt auch der Bereitstellung eines Fahrzeugs mit einer derartigen Heiz- und/oder Klimaanlage zugrunde.

Ferner liegt der im unabhängigen Verfahrensanspruch angegebenen Erfindung ein entsprechendes Problem zur Steuerung einer derartigen Heiz- und/oder Klimaanlage bei einem Fahrzeug zugrunde.

### Zusammenfassung der Erfindung:

Das der im Anspruch 1 angegebenen Erfindung zugrundeliegende Problem wird durch die im Anspruch 1 aufgeführten Merkmale gelöst. Dadurch, dass die Heiz- und/oder Klimaanlage für ein Fahrzeug, die mindestens eine Frischluftzufuhrleitung zum Leiten von Frischluft für einen Fahrzeuginnenraum, wenigstens ein zumindest zum Fördern von Frischluft durch mindestens eine der wenigstens einen Frischluftzufuhrleitung angeordnetes Gebläse, mindestens eine Abluftleitung zum Leiten von Abluft aus einem Fahrzeuginnenraum und wenigstens eine Abluftfördereinrichtung, angeordnet zum Fördern von Abluft durch zumindest eine der wenigstens einen Abluftleitung und nach außen in die Umgebung, umfasst, wobei die Heiz- und/oder Klimaanlage zumindest einen sowohl in oder als Bestandteil von zumindest einer der wenigsten einen Frischluftzufuhrleitung als auch in oder als Bestandteil von zumindest einer der wenigstens einen Abluftleitung angeordneten als Luft-Luft-Wärmetauscher ausgebildeten ersten Wärmetauscher zum Wärmetausch zwischen Frischluft und Abluft umfasst und in der Frischluftzufuhrleitung stromabwärts des ersten Wärmetauschers zumindest ein zweiter Wärmetauscher zum Wärmetausch zwischen Frischluft und einem bei Betrieb in einem Kreislauf zirkulierenden Medium derart angeordnet ist, dass er hinsichtlich der Luftbehandlung zum Heizen und/oder Kühlen nur der Frischluft vorgesehen ist, und wobei die Heiz- und/oder Klimaanlage wenigstens einen weiteren nur in einer von der Frischluftzufuhrleitung räumlich getrennten Umluftleitung angeordneten und zum Kühlen und/oder Heizen von Umluft ausgebildeten Wärmetauscher umfasst, wird das Problem gelöst.

Die Erfindung hat den Vorteil, dass die insbesondere durch die zuvor erfolgte Luftbehandlung erwärmte oder gekühlte Abluft direkt und unmittelbar zum Vorwärmen oder Vorkühlen der Frischluft für einen Fahrzeuginnenraum nutzbar ist. Dies ermöglicht eine effiziente Nutzung der Abluft. Material und Kosten für einen sonst im Stand der Technik zwischengeschalteten Wärmetausch der Abluft mit einem in einem Kreislauf zirkulierenden Wärmemedium sind nicht notwendig. Dadurch entfallen vorteilhaft entsprechende Einschränkungen in Position eines derartigen Kreislaufs und Lage seiner Leitungen. So kann unproblematisch bei dennoch Nutzbarkeit der Abluft beispielsweise ein Kältemittelkreislauf und/oder ein Sekundärkreislauf einer Heiz- und/oder Klimaanlage abseits der Abluftleitung angeordnet sein. Vorteilhaft ist, dass die im ersten Wärmetauscher von der Abluft vorgewärmte oder vorgekühlte Frischluft zusätzlich abgestimmt auf die Solltemperatur im zweiten Wärmetauscher heiz- und/oder kühlbar ist. Eine vorherige Vermischung mit Umluft und damit undifferenzierte Erwärmung oder Kühlung von Umluft und Frischluft findet so nicht statt, was eine Möglichkeit einer höheren Effizienz der Heiz- und/oder Klimaanlage bietet. Vorteilhaft ist mit dem zum Kühlen und/oder Heizen von Umluft angeordneten und ausgebildeten Wärmetauscher eine effektive Luftbehandlung der Umluft ermöglicht, was der Effizienz der Heiz- und/oder Klimaanlage dient.

Das bei Betrieb in einem Kreislauf zirkulierende Medium ist beispielsweise ein Kältemittel eines Kältemittelkreislaufs oder eine Kühl- und/oder Heizflüssigkeit eines Kühl- und/oder Heizkreislaufs.

Als Abluftleitung kommt jede geeignete Form, Art und Größe von Leitung, durch die aus einem Fahrzeuginnenraum stammende Abluft strömen kann, infrage. Als Frischluftzufuhrleitung kommt jede geeignete Form, Art und Größe von Leitung, durch die Frischluft für einen Fahrzeuginnenraum strömen kann, infrage. Ein Fahrzeuginnenraum ist zum Beispiel der Fahrer- und/oder Fahrgastraum, wie eine Fahrerkabine und/oder Fahrgastkabine. Als Gebläse und Abluftfördereinrichtung kommt jeweils eine Luftfördereinrichtung jedweder geeigneter Art wie zum Beispiel Radiallüfter, Doppelradiallüfter, Axiallüfter oder Querstromlüfter in Betracht.

In den Unteransprüchen sind vorteilhafte Ausgestaltungen, Weiterbildungen und Verbesserungen des jeweiligen Gegenstandes der Erfindung angegeben.

Besonders von Vorteil ist die Einrichtung des zumindest einen zweiten Wärmetauschers als umschaltbar zwischen Kühlen und Heizen der Frischluft. Damit ist für beide Funktionen ein und derselbe zweite Wärmetauscher einsetzbar, was Material, Kosten und Platzbedarf verringert.

Gemäß einer vorteilhaften Weiterbildung umfasst die Heiz- und/oder Klimaanlage einen Kältemittelkreislauf mit Verdichter, Kondensator/Gaskühler, Expansionsorgan und Verdampfer, der zwischen Wärmepumpenbetrieb zum Heizen und Klimabetrieb zum Kühlen umschaltbar ausgebildet ist. Dadurch ist der Kältemittelkreislauf sowohl zum Kühlen als auch zum Heizen einsetzbar. In einem nur unterkritisch betreibbaren Kältemittelkreislauf zum Beispiel mit dem Kältemittel R-1234yf ist der Kondensator/Gaskühler ein Kondensator. Er ist hingegen ein Gaskühler bei einem überkritisch beispielsweise mit CO2 betreibbaren Kältemittelkreislauf.

Bevorzugt ist das zumindest eine Gebläse für die Frischluftzufuhr derart angeordnet, dass mit ihm nur Frischluft förderbar ist. Damit ist die Frischluftzufuhr für einen Fahrzeuginnenraum ohne Klappenanordnung einstellbar. Besonders von Vorteil ist eine Ausführungsform bei der wenigstens ein weiteres Gebläse nur zum Fördern von Umluft bezüglich eines Fahrzeuginnenraums vorgesehen ist. Dadurch ist die Frischluftzufuhr für einen Fahrzeuginnenraum vom Umluftstrom völlig entkoppelt.

Nach einer vorteilhaften Ausführungsform der Heiz- und/oder Klimaanlage sind die Motoren des wenigstens einen Gebläses für die Frischluftzufuhr und der wenigstens einen Abluftfördereinrichtung jeweils elektrisch betreibbar und in ihrer Drehzahl regelbar ausgebildet. Damit sind Fördermenge pro Zeit von Abluft und Frischluft jeweils regelbar. Der Luftdruck und die Größe des Luftaustausches in einem Fahrzeuginnenraum sind so einstellbar. Ferner ist dadurch eine Variationsmöglichkeit bei dem Vorkühlen oder Vorheizen der Frischluft durch Abluft im ersten Wärmetauscher gegeben.

Vorzugsweise ist die erfindungsgemäße Heiz- und/oder Klimaanlage derart ausgebildet, dass die Größe des durchströmbaren Querschnitts für die Frischluftzufuhr durch die Frischluftleitung/en und/oder die Größe des durchströmbaren Querschnitts für die Abluft durch die Abluftleitung/en variierbar ist/sind. Dieses ist beispielsweise durch entsprechende Klappenanordnung/en oder andere bekannte Vorrichtungen zur variablen Verstellung des durchströmbaren Querschnitts realisierbar. Damit sind bei Betrieb die Fördermenge pro Zeit von Abluft und/oder Frischluft regelbar. Der Luftdruck und die Größe des Luftaustausches in einem Fahrzeuginnenraum sind so einstellbar. Ferner ist dadurch eine Variationsmöglichkeit bei dem Vorkühlen oder Vorheizen der Frischluft durch Abluft im ersten Wärmetauscher gegeben.

Nach einer vorteilhaften Ausführungsform der Heiz- und/oder Klimaanlage umfasst der wenigstens eine erste Wärmetauscher zueinander benachbarte durch eine gemeinsame ein wärmeleitendes Material aufweisende Wand voneinander getrennte Kanäle, wovon jeweils der eine für das Leiten von Frischluft und der andere für das Leiten von Abluft vorgesehen ist. Dieses hat den Vorteil eines guten direkten Wärmetauschs zwischen Abluft und Frischluft. Dabei ist die Anzahl der Kanäle nicht auf zwei beschränkt, sondern der erste Wärmetauscher kann zum Beispiel mehrere dieser Paare von benachbarten Kanälen enthalten oder mehrere Kanäle verlaufen derart benachbart, dass Kanal für Abluft an Kanal für Frischluft jeweils im Wechsel nebeneinander liegt. Die Form des Querschnitts eines Kanals ist nicht festgelegt. Es sind Ausgestaltungen mit beispielsweise dreieckigem, quadratischem, rundem, rechteckigem oder sechseckigem Querschnitt senkrecht zur Strömungsrichtung denkbar. Die jeweilige zwei benachbarte Kanäle trennende gemeinsame Wand kann zum Beispiel aus Metall als wärmeleitendem Material bestehen oder aus einem gut wärmeleitendem Kunststoff. Auch ist eine Mischung aus gut wärmeleitendem Material mit nicht so gut wärmeleitendem Material für derartige Wände denkbar. Besonders effektiv für einen Wärmetausch zwischen Frischluft und Abluft ist dabei eine Ausgestaltung des ersten Wärmetauschers, bei der die zwei oder mehr Kanäle mit ihren Längsachsen parallel zueinander liegen sowie die jeweiligen Querschnitte der Kanäle senkrecht zur Längsachse gleichgroß rechteckig vorzugsweise quadratisch oder dreieckig geformt und karomusterartig zueinander in der Weise angeordnet sind, dass bezüglich ihren jeweiligen Seiten keine Kanäle für das Leiten von Frischluft aneinander grenzen sowie keine Kanäle für das Leiten von Abluft aneinander grenzen.

Gemäße einer weiteren vorteilhaften Ausführungsform der Heiz- und/oder Klimaanlage sind die zum Leiten von Abluft und zum Leiten von Frischluft vorgesehenen Kanäle des ersten Wärmetauschers schichtweise im Wechsel zwischen zum Leiten von Abluft und zum Leiten von Frischluft aneinander angeordnet. Dabei ist der Wärmetausch zwischen Abluft und Frischluft durch wärmeleitende Trennwände der Schichten gut realisierbar, wobei die Strömungsrichtungen von Abluft und Frischluft in Schichtebene nicht parallel zueinander verlaufen müssen, also einen Winkel zueinander aufweisen können. Eine bevorzugte Ausgestaltung ist dabei, dass die Kanäle vorgesehen zum Leiten von Frischluft bezüglich der Strömungsrichtung von Frischluft zueinander parallel angeordnet und derart hinsichtlich ihrer Längsausdehnung in Größe und im Winkel zu den für die Abluft vorgesehenen Kanälen ausgebildet sind, dass ihre Einlassöffnungen an einer ersten und ihre Auslassöffnungen an einer zweiten Seite und die Einlassöffnungen für das Leiten von Abluft vorgesehenen Kanäle an einer dritten und deren Auslassöffnungen an einer vierten Seite des ersten Wärmetauschers angeordnet sind. Damit sind auf einfache Weise die Abluftleitung und Frischluftzufuhrleitung mit dem gemeinsamen ersten Wärmetauscher als jeweils ihrem Bestandteil voneinander getrennt geführt. Eine extra Aufteilung der Frischluftzufuhrleitung und/oder der Abluftleitung vor und nach dem ersten Wärmetauscher ist entbehrlich.

Nach einer vorteilhaften Ausführungsform weist der vertikale Querschnitt längs der vorgesehenen Strömungsrichtungen von Abluft und Frischluft des ersten Wärmetauschers eine Sechseckform, bei der die sich gegenüberliegenden Seiten parallel zueinander verlaufen, auf. Bei einer derartigen Form können Abluft und Frischluft in ihren jeweiligen Strömungsrichtungen über Kreuz gerade durch den ersten Wärmetauscher getrennt voneinander hindurchströmen. Der jeweilige Strömungswiderstand wird geringgehalten.

Gemäß einer vorteilhaften Weiterbildung der erfindungsgemäßen Heiz- und/oder Klimaanlage umfasst sie in der wenigstens einen Abluftleitung stromabwärts des ersten Wärmetauschers zumindest einen derart ausgebildeten dritten Wärmetauscher zum Wärmetausch zwischen Abluft und einem bei Betrieb in einem Kreislauf zirkulierenden Medium, dass mit dem dritten Wärmetauscher im Heizbetrieb der Heiz- und/oder Klimaanlage Wärme aus der Abluft und/oder im Klimabetrieb der Heiz- und/oder Klimaanlage Kälte aus der Abluft für den Betrieb der Heiz- und/oder Klimaanlage zurückgewinnbar ist. Damit wird zusätzlich zur direkten Nutzung der Abluft im ersten Wärmetauscher die Abluft mittelbar für eine Erhöhung der Effizienz der Heiz- und/oder Klimaanlage genutzt.

Vorzugsweise umfasst die erfindungsgemäße Heiz- und/oder Klimaanlage eine Steuerung zumindest zum Regeln der Frischluftzufuhr durch den wenigstens einen ersten Wärmetauscher und das wenigstens eine für zumindest die Frischluftzufuhr vorgesehene Gebläse und der Abfuhrmenge pro Zeit von Abluft durch den wenigstens einen ersten Wärmetauscher und die wenigstens eine Abluftfördereinrichtung. Die Steuerung ist beispielsweise ausgebildet zum Steuern der Drehzahlen der Motoren des wenigstens einen Gebläses für die Frischluftzufuhr und der wenigstens einen Abluftfördereinrichtung und/oder zum Steuern der Größe des durchströmbaren Querschnitts für die Frischluftzufuhr durch die Frischluftleitung/en und/oder der Größe des durchströmbaren Querschnitts für die Abluft durch die Abluftleitung/en. Damit sind insbesondere der Fischluftvolumenstrom, der Luftdruck im Fahrzeuginnenraum wie im Fahrerraum und/oder Fahrgastraum sowie das Vorheizen beziehungsweise Vorkühlen der Frischluft durch Abluft im ersten Wärmetauscher automatisch steuerbar.

Gemäß einer bevorzugten Ausführungsform sind die luftleitenden, luftfördernden und die direkt luftbehandelnden Bestandteile der Heiz- und/oder Klimaanlage in einer zum Positionieren auf oder teilintegriert in einem Fahrzeugdach ausgebildeten Einheit angeordnet. Dieses ist insbesondere für ein größeres langgestrecktes bodengebundenes Fahrzeug wie zum Beispiel ein Omnibus oder Schienenfahrzeug von Vorteil.

Schließlich können die Merkmale der Unteransprüche für die erfindungsgemäße Heiz- und/oder Klimaanlage im Wesentlichen frei miteinander und nicht durch die den Ansprüchen vorliegende Reihenfolge festgelegt kombiniert werden, sofern sie unabhängig voneinander sind und sich nicht gegenseitig ausschließen.

Mit einem Fahrzeug mit einer erfindungsgemäßen Heiz- und/oder Klimaanlage wird das dem Anspruch 15 zugrundeliegende Problem gelöst. Bezüglich vorteilhafter Ausgestaltungen und Weiterbildungen und deren Vorzüge gelten entsprechend die obigen Angaben zur erfindungsgemäßen Heiz- und/oder Klimaanlage. Bevorzugt ist das Fahrzeug ein Bau- oder Landwirtschafts- oder Straßen- oder Schienenfahrzeug.

Das Problem bezüglich eines Verfahrens wird durch ein Verfahren zum Steuern einer erfindungsgemäßen Heiz- und/oder Klimaanlage bei einem Fahrzeug, mit den Schritten des Regelns der Frischluftzufuhr durch den wenigstens einen ersten Wärmetauscher und das wenigstens eine zumindest für die Frischluftzufuhr vorgesehene Gebläse, und des Regelns der Abfuhrmenge pro Zeit von Abluft durch den wenigstens einen ersten Wärmetauscher und die wenigstens eine Abluftfördereinrichtung, gelöst.

Beispielsweise werden dabei die Drehzahlen der Motoren des wenigstens einen Gebläses für die Frischluftzufuhr und der wenigstens einen Abluftfördereinrichtung und/oder die Größe des durchströmbaren Querschnitts für die Frischluftzufuhr durch die Frischluftleitung/en und/oder die Größe des durchströmbaren Querschnitts für die Abluft durch die Abluftleitung/en automatisch geregelt. So werden insbesondere der Fischluftvolumenstrom, der Luftdruck im Fahrzeuginnenraum wie im Fahrerraum und/oder Fahrgastraum sowie vorteilhaft das im ersten Wärmetauscher erfolgende Vorheizen beziehungsweise Vorkühlen der Frischluft durch Abluft gesteuert.

### Kurze Beschreibung der Zeichnungen:

Anhand der Zeichnungen werden Ausführungsbeispiele der Erfindung erläutert.

Es zeigen
Fig. 1 einen vertikalen Querschnitt durch ein Ausführungsbeispiel einer Heiz- und/oder Klimaanlage;
Fig. 2 einen Luft-Luft-Wärmetauscher als Ausführungsbeispiel des ersten Wärmetauschers der in Figur 1 gezeigten Heiz- und/oder Klimaanlage;
Fig. 3 einen Querschnitt senkrecht zur Luftströmungsrichtung eines weiteren Ausführungsbeispiels eines Luft-Luft-Wärmetauschers als erster Wärmetauscher für eine erfindungsgemäßen Heiz- und/oder Klimaanlage;
Fig. 4 ein Fahrzeug mit einem Ausführungsbeispiel einer erfindungsgemäßen Heiz- und/oder Klimaanlage; und
Fig. 5 als Flussdiagramm ein Verfahren zum Steuern einer erfindungsgemäßen Heiz- und/oder Klimaanlage bei einem Fahrzeug.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

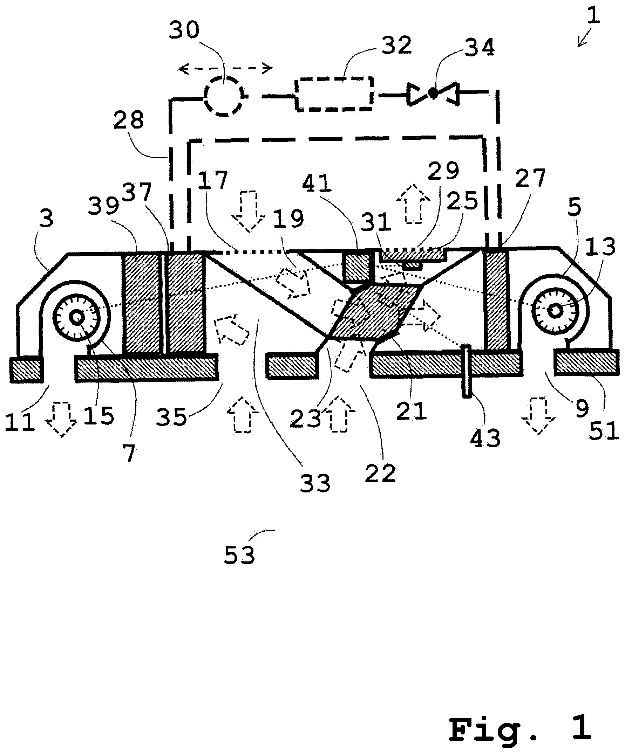

In Figur 1 ist in einem vertikalen Querschnitt ein Ausführungsbeispiel einer Heiz- und/oder Klimaanlage 1 gezeigt, die auf einem Fahrzeugdach 51 eines Fahrzeugs wie zum Beispiel eines Omnibusses montiert ist. Unter dem Gehäusedeckel 3 der Heiz- und/oder Klimaanlage 1 sind jeweils als Radiallüfter ausgebildet auf der rechten Seite ein Gebläse 5 nur für die Frischluftzufuhr und auf der linken Seite ein weiteres Gebläse 7 nur für die Umluft mit jeweils Ausblasrichtung nach unten durch Ausblasöffnungen 9 und 11 in den Fahrzeuginnenraum 53, der beispielsweise als Fahrgastraum ausgebildet ist, angeordnet. Es sind auch jeweils Ausführungen von Gebläse 5 und dem weiteren Gebläse 7 als zum Beispiel Doppelradiallüfter oder Axiallüfter oder Querstromlüfter denkbar. Beide Gebläse 5 und 7 verfügen über jeweils einen elektrisch betreibbaren Motor 13, 15, der in seiner Drehzahl regelbar ist. Für vom Gebläse 5 anzusaugende Frischluft befindet sich eine Einlassöffnung 17 im Gehäusedeckel 3, von der die Frischluftzufuhrleitung 19 die eingesaugte Frischluft zum Gebläse 5 leitet und von dort in den Fahrzeuginnenraum 53 geblasen wird. In der Frischluftzufuhrleitung 19 ist als ihr Bestandteil stromabwärts der Einlassöffnung 17 ein erster Wärmetauscher 21 angeordnet. Dieser Wärmetauscher 21 ist als ein Luft-Luft-Wärmetauscher zum Wärmetausch zwischen Frischluft und Abluft ausgebildet. Er ist dafür auch in der Abluftleitung 23, die zum Leiten von Abluft aus einem Fahrzeuginnenraum 53 durch die Auslassöffnung 22 zu einer Abluftfördereinrichtung 25 eingerichtet ist, als deren Bestandteil angeordnet. Der erste Wärmetauscher 21 stellt also sowohl einen Bestandteil der Frischluftzufuhrleitung 19 als auch der Abluftleitung 23 dar. Er verfügt über Kanäle für Frischluft sowie damit wärmeleitend verbundene Kanäle für Abluft. Die Strömungsrichtungen von Abluft und Frischluft kreuzen sich im ersten Wärmetauscher 21. Sein vertikaler Querschnitt längs der vorgesehenen Strömungsrichtung von Abluft und Frischluft weist eine Sechseckform, bei der die sich gegenüberliegenden Seiten parallel zueinander verlaufen, auf. Die vorgesehenen Luftströmungen sind mit gestrichelten Pfeilen gezeigt.

In der Frischluftzufuhrleitung 19 befindet sich stromabwärts des ersten Wärmetauschers 21 vor dem Gebläse 5 ein zweiter Wärmetauscher 27, der zum Wärmetausch zwischen Frischluft und einem Medium, das bei Betrieb in einem Kreislauf zirkuliert, vorgesehen ist. Der zweite Wärmetauscher 27 ist umschaltbar einerseits zum Heizen der Frischluft und andererseits zum Kühlen der Frischluft ausgebildet. Das Medium ist in diesem Fall ein Kältemittel wie beispielsweise CO2, das bei Betrieb in einem zwischen Klimabetrieb zum Kühlen und Wärmepumpenbetrieb zum Heizen umschaltbaren Kältemittelkreislauf 28 zirkuliert. Der Kältemittelkreislauf 28 ist nur schematisch mit gestrichelten Linien dargestellt. Er umfasst neben dem zweiten Wärmetauscher 27 und dem weiteren Wärmetauscher 37 den Verdichter 30, den zwischen Gaskühler- und Verdampferfunktion umschaltbaren Außenwärmetauscher 32 und das Expansionsorgan 34 mit Kältemittelleitungen im Kreislauf verbunden, wobei der zweite Wärmetauscher 27 zum einen als Verdampfer und zum andern als Gaskühler fungiert. Denkbar ist auch ein zweiter Wärmetauscher 27 zum Wärmetausch der Frischluft mit einem als Heiz- und/oder Kühlflüssigkeit ausgebildetem Medium eines Heiz- und/oder Kühlkreislaufs, der beispielsweise als Sekundärkreislauf in Wärmetauschverbindung mit einem primären umschaltbaren Kältemittelkreislauf 28 steht.

Die als Axiallüfter ausgebildete Abluftfördereinrichtung 25 fördert bei Betrieb die Abluft aus dem Fahrzeuginnenraum 53 durch die mit dem ersten Wärmetauscher 21 versehene Abluftleitung 23 und weiter durch die Ausblasöffnung 29 im Gehäusedeckel 3 nach außen in die Umgebung. Als Abluftfördereinrichtung 25 ist auch eine andere geeignete Art von Luftfördereinrichtung wie beispielsweise Radiallüfter oder Doppelradiallüfter oder Querstromlüfter denkbar. Der elektrisch betreibbare Motor 31 zum Antreiben des Rotors der Abluftfördereinrichtung 25 ist in seiner Drehzahl regelbar ausgebildet.

Die von der Frischluftzufuhrleitung 19 getrennt auf der linken Seite der Heiz- und/oder Klimaanlage 1 angeordnete Umluftleitung 33 dient der Leitung von vom Gebläse 7 angesaugter Umluft aus dem Fahrzeuginnenraum 53 durch die Einlassöffnung 35, die beiden weiteren Wärmetauscher 37 und 39 zum Gebläse 7. Der zum Kühlen der Umluft dienende Wärmetauscher 37 ist unter anderem als Verdampfer des Kältemittelkreislaufs 28 ausgebildet. Ebenso einsetzbar wäre ein als Luft-Kühlflüssigkeits-Wärmetauscher ausgebildeter Wärmetauscher 37 eines in Wärmetauschverbindung zum Kältemittelkreislauf 28 stehenden Kühlkreises. Der zum Heizen der Umluft dienende Wärmetauscher 39 ist ein elektrisches Heizelement. Denkbar ist aber auch die Ausbildung als ein Luft-Heizflüssigkeits-Wärmetauscher eines Heizkreises oder als Kondensator/Gaskühler des Kältemittelkreislaufs 28.

Die Steuerung 41 ist ausgebildet zum Regeln der Drehzahlen der drei Motoren 13, 15, 31. Dazu verfügt die Heiz- und/oder Klimaanlage 1 über einen Drucksensor 43 zum Messen des Luftdrucks im Fahrzeuginnenraum 53. Die von der Steuerung 41 vom Drucksensor 43 empfangenen Messdaten sowie die eingestellten Förderleistungen des Gebläses 5 für die Frischluftzufuhr und der Abluftfördereinrichtung 25 werden von der Steuerung 41 mit den Sollwerten für den Luftdruck im Fahrzeuginnenraum 53, dem für den Frischluftvolumenstrom und dem für die Stärke des Vorkühlens oder Vorheizens der Frischluft durch die Abluft im ersten Wärmetauscher 21 verglichen. Bei Abweichung von den Sollwerten wird von der Steuerung 41 versucht, die Abweichung durch entsprechendes Regeln erstens der Drehzahlen des Motors 13 und damit der Frischluftzufuhr durch den ersten Wärmetauscher 21 und das Gebläse 5 und zweitens der Drehzahl des Motors 31 und damit der Abfuhrmenge pro Zeit von Abluft durch den ersten Wärmetauscher 21 und die Abluftfördereinrichtung 25 automatisch auszugleichen. Unabhängig davon ist der Umluftvolumenstrom von der Steuerung 41 durch Regeln der Drehzahl des Motors 15 einstellbar. Die Steuerung 41 verfügt über einen Prozessor.

Auch ist eine Ausführungsvariante der Heiz- und/oder Klimaanlage 1 denkbar, die lediglich als Klimaanlage läuft, wie zum Beispiel ohne den weiteren Wärmetauscher 39 sowie mit einem nur im Klimabetrieb betreibbaren Kältemittelkreislauf 28. Umgekehrt ist die Variante der Heiz- und/oder Klimaanlage 1 möglich, die lediglich als Heizanlage läuft, wie beispielsweise mit einem nur im Wärmepumpenbetrieb betreibbaren Kältemittelkreislauf 28.

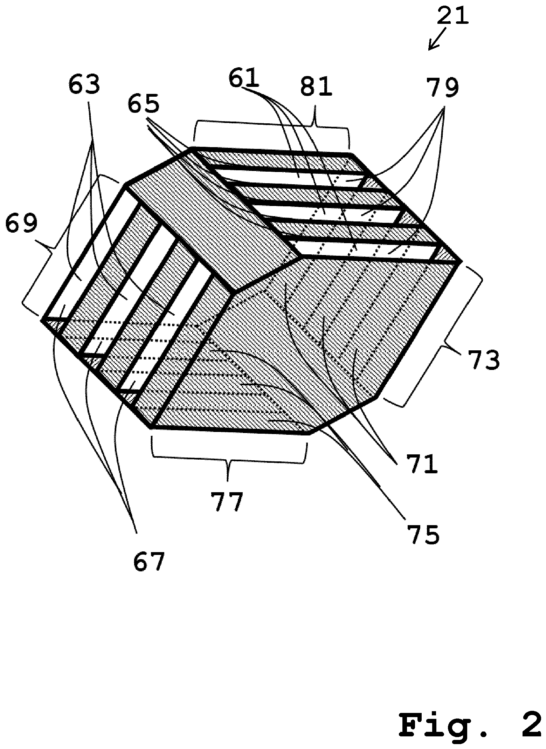

In Figur 2 ist ein Luft-Luft-Wärmetauscher als Ausführungsbeispiel des ersten Wärmetauschers 21 der in Figur 1 gezeigten Heiz- und/oder Klimaanlage dargestellt. Hierbei sind die zum Leiten von Abluft vorgesehenen Kanäle 61 und die zum Leiten von Frischluft vorgesehenen Kanäle 63 schichtweise im Wechsel aneinander angeordnet. Zueinander benachbarte Kanäle 61 und 63 sind durch eine gemeinsame Wand 65 aus Aluminium als wärmeleitendes Material voneinander getrennt. Die Wände 65 können ebenso ein beliebig anderes geeignetes wärmeleitendes Material wie beispielsweise Stahlblech oder Messing aufweisen. Direkt durch die Wände 65 getrennt werden jeweils ein zum Leiten von Frischluft vorgesehener Kanal 63 und ein zum Leiten von Abluft vorgesehener Kanal 61. Der vertikale Querschnitt längs der vorgesehenen Strömungsrichtungen von Abluft und Frischluft des ersten Wärmetauschers weist eine Sechseckform, bei der die sich gegenüberliegenden Seiten parallel zueinander verlaufen, auf. Die zum Leiten von Frischluft vorgesehenen Kanäle 63 sind bezüglich der Strömungsrichtung von Frischluft zueinander parallel angeordnet. Also ist vorgesehen, dass Frischluft durch all diese Kanäle 63 in einer Richtung hindurchströmt. Die zum Leiten von Abluft vorgesehenen Kanäle 61 sind entsprechend bezüglich der Strömungsrichtung von Abluft zueinander parallel angeordnet. Also ist vorgesehen, dass Abluft durch all diese Kanäle 61 in einer Richtung hindurchströmt. Die Strömungsrichtungen von Abluft und Frischluft stehen im Winkel zueinander. Dieser Winkel und die Größe der Längsausdehnung der Kanäle 61 und 63 ist so bemessen, dass die Einlassöffnungen 67 der Kanäle 63 für die Frischluft an einer ersten Seite 69 und ihre Auslassöffnungen 71 an einer zweiten Seite 73 und die Einlassöffnungen 75 für das Leiten von Abluft vorgesehenen Kanäle an einer dritten Seite 77 und deren Auslassöffnungen 79 an einer vierten Seite 81 des ersten Wärmetauschers 21 angeordnet sind.

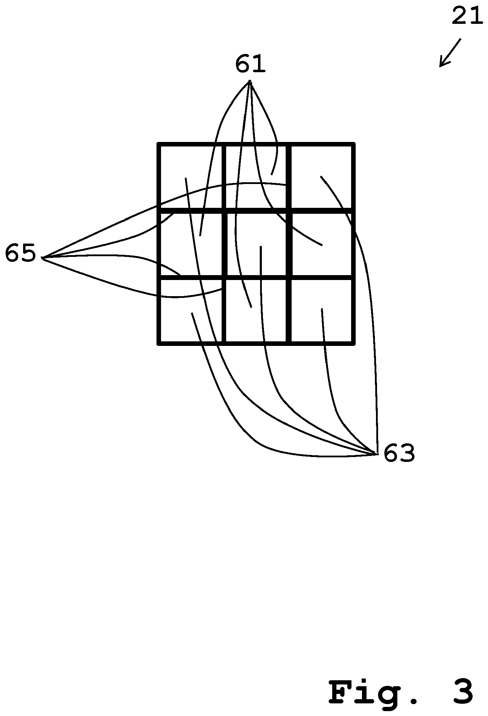

In Figur 3 ist einen Querschnitt senkrecht zur Luftströmungsrichtung eines weiteren Ausführungsbeispiels eines Luft-Luft-Wärmetauschers als erster Wärmetauscher 21 für eine erfindungsgemäßen Heiz- und/oder Klimaanlage gezeigt. Hierbei liegen sowohl die zum Leiten von Abluft vorgesehenen Kanäle 61 als auch die zum Leiten von Frischluft vorgesehenen Kanäle 63 mit ihren senkrecht zur Bildebene verlaufenden Längsachsen parallel zueinander. Die jeweiligen Querschnitte der Kanäle 61 und 63 senkrecht zur Längsachse sind gleichgroß quadratisch geformt und karomusterartig zueinander in der Weise angeordnet, dass bezüglich ihren jeweiligen Seiten keine Kanäle 63 für das Leiten von Frischluft aneinander grenzen sowie keine Kanäle 61 für das Leiten von Abluft aneinander grenzen. Von zueinander benachbarten mit jeweils einer gemeinsamen Wand 65 voneinander getrennten Kanälen 61 und 63 ist jeweils einer für das Leiten von Abluft und der andere für das Leiten von Frischluft vorgesehen. Die trennenden Wände 65 bestehen aus Aluminium als wärmeleitendes Material. Sie können ebenso ein beliebig anderes geeignetes wärmeleitendes Material wie beispielsweise Stahlblech oder Messing oder eine Mischung aus gut und nicht gut wärmeleitenden Materialien aufweisen.

Denkbar sind auch Ausführungsformen des ersten Wärmetauschers 21, bei denen die gleichgroßen zur Längsachse senkrechten Querschnitte der zueinander parallel verlaufenden Kanäle 61 und 63 rechteckig oder dreieckig, vorzugsweise gleichseitig dreieckig, geformt sind und entsprechend dem in Figur 3 gezeigten Ausführungsbeispiel karomusterartig bezüglich Kanälen 61 für Abluft und Kanälen 63 für Frischluft zueinander angeordnet sind.

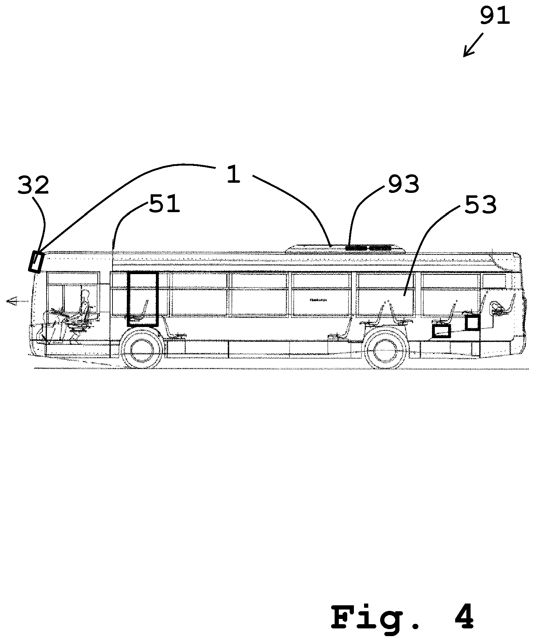

In Figur 4 ist ein Fahrzeug 91 mit einem Ausführungsbeispiel einer erfindungsgemäßen Heiz- und/oder Klimaanlage 1 gezeigt. Es handelt sich hierbei um einen Omnibus auf dessen Fahrzeugdach 51 eine Einheit 93 der Heiz- und/oder Klimaanlage 1 positioniert ist. Die Einheit 93 enthält insbesondere die luftleitenden, die luftfördernden und die direkt luftbehandelnden Bestandteile der Heiz- und/oder Klimaanlage 1.

So sind dort insbesondere die Frischluftzufuhrleitung zum Leiten von Frischluft für den Fahrzeuginnenraum 53, das Gebläse zum Fördern von Frischluft durch die Frischluftzufuhrleitung, die Abluftleitung zum Leiten von Abluft aus dem Fahrzeuginnenraum 53 und die Abluftfördereinrichtung zum Fördern von Abluft durch die Abluftleitung und nach außen in die Umgebung angeordnet. In der Frischluftzufuhrleitung als auch in der Abluftleitung ist der als Luft-Luft-Wärmetauscher ausgebildete erste Wärmetauscher zum Wärmetausch zwischen Frischluft und Abluft angeordnet. Auch die Steuerung zum Regeln der Frischluftzufuhr durch den ersten Wärmetauscher und das für die Frischluftzufuhr vorgesehene Gebläse und der Abfuhrmenge pro Zeit von Abluft durch den ersten Wärmetauscher und die Abluftfördereinrichtung befindet sich verdeckt in der Einheit 93. Die Heiz- und/oder Klimaanlage 1 ist beispielsweise wie die in Figur 1 gezeigte ausgebildet. Der Außenwärmetauscher 32 des Kältemittelkreislaufs der Heiz- und/oder Klimaanlage 1 ist in diesem Fall ohne darauf beschränkt zu sein außerhalb der Einheit 93 vorne an der Front des Fahrzeugs 91 montiert. Es sind auch Ausführungen denkbar, bei denen die gesamte Heiz- und/oder Klimaanlage 1 als eine Einheit 93 auf oder teilintegriert in dem Fahrzeugdach 51 angeordnet ist. Ferner ist auch eine Heiz- und/oder Klimaanlage 1 mit mehreren Frischluftzufuhrleitungen und Gebläsen dafür sowie mehreren Abluftleitungen und Abluftfördereinrichtungen dafür sowie entsprechend vielen ersten Wärmetauschern zum Wärmetausch zwischen Abluft und Frischluft ausführbar.

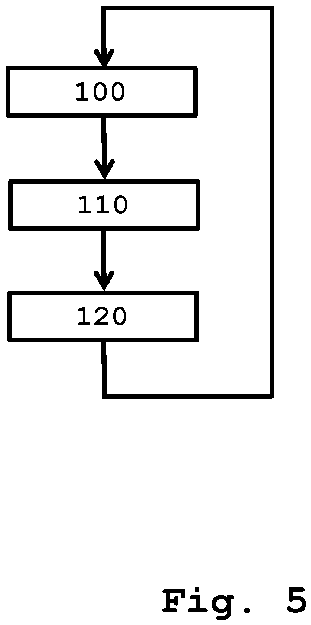

Ein Verfahren zum Steuern einer erfindungsgemäßen Heiz- und/oder Klimaanlage bei einem Fahrzeug ist als Flussdiagramm in Figur 5 dargestellt. Die Heiz- und/oder Klimaanlage ist beispielsweise die in Figur 1 gezeigte. Das Verfahren enthält nach dem Erfassen der Istwerte durch entsprechende Sensoren von dem Luftdruck im Fahrzeuginnenraum, der Größe des Frischluftvolumenstroms und der Temperaturen der Umgebung sowie der Luft im Fahrzeuginnenraum im Schritt 100 den Schritt 110 des Regelns der Frischluftzufuhr durch den ersten Wärmetauscher und das für die Frischluftzufuhr vorgesehene Gebläse. Im folgenden Schritt 120 wird die Abfuhrmenge pro Zeit von Abluft durch den ersten Wärmetauscher und die wenigstens eine Abluftfördereinrichtung geregelt. Bei den Schritten 110 und 120 werden die Drehzahlen der Motoren des wenigstens einen für die Frischluftzufuhr vorgesehenen Gebläses und der wenigstens einen Abluftfördereinrichtung geregelt. Die Schritte 110 und 120 erfolgt um möglichst vorgegebenen Sollwerte für den Luftdruck und die Lufttemperatur im Fahrzeuginnenraum sowie für die Größe des Frischluftvolumenstroms zu erreichen. Verfahren zum Steuern einer erfindungsgemäßen Heiz- und/oder Klimaanlage, bei denen die Schritte 110 und 120 gleichzeitig oder in umgekehrter Reihenfolge ablaufen, sind ebenfalls denkbar.

## Patentansprüche

1. Heiz- und/oder Klimaanlage (1) für ein Fahrzeug (91), die mindestens eine Frischluftzufuhrleitung (19) zum Leiten von Frischluft für einen Fahrzeuginnenraum (53), wenigstens ein zumindest zum Fördern von Frischluft durch mindestens eine der wenigstens einen Frischluftzufuhrleitung (19) angeordnetes Gebläse (5), mindestens eine Abluftleitung (23) zum Leiten von Abluft aus einem Fahrzeuginnenraum (53) und wenigstens eine Abluftfördereinrichtung (25), angeordnet zum Fördern von Abluft durch zumindest eine der wenigstens einen Abluftleitung (23) und nach außen in die Umgebung, umfasst, wobei die Heiz- und/oder Klimaanlage (1) zumindest einen sowohl in oder als Bestandteil von zumindest einer der wenigstens einen Frischluftzufuhrleitung (19) als auch in oder als Bestandteil von zumindest einer der wenigstens einen Abluftleitung (23) angeordneten als Luft-Luft-Wärmetauscher ausgebildeten ersten Wärmetauscher (21) zum Wärmetausch zwischen Frischluft und Abluft umfasst und in der Frischluftzufuhrleitung (19) stromabwärts des ersten Wärmetauschers (21) zumindest ein zweiter Wärmetauscher (27) zum Wärmetausch zwischen Frischluft und einem bei Betrieb in einem Kreislauf zirkulierenden Medium derart angeordnet ist, dass er hinsichtlich der Luftbehandlung zum Heizen und/oder Kühlen nur der Frischluft vorgesehen ist, **dadurch gekennzeichnet,**
**dass** die Heiz- und/oder Klimaanlage (1) wenigstens einen weiteren nur in einer von der Frischluftzufuhrleitung (19) räumlich getrennten Umluftleitung (33) angeordneten und zum Kühlen und/oder Heizen von Umluft ausgebildeten Wärmetauscher (37, 39) umfasst.

2. Heiz- und/oder Klimaanlage (1) nach Anspruch 1 **dadurch gekennzeichnet, dass** der zumindest eine zweite Wärmetauscher (27) zwischen Kühlen und Heizen der Frischluft umschaltbar eingerichtet ist.

3. Heiz- und/oder Klimaanlage (1) nach Anspruch 1 oder 2 **dadurch gekennzeichnet, dass** sie einen Kältemittelkreislauf (28) mit Verdichter (30), Kondensator/Gaskühler, Expansionsorgan (24) und Verdampfer umfasst, der zwischen Wärmepumpenbetrieb zum Heizen und Klimabetrieb zum Kühlen umschaltbar ausgebildet ist.

4. Heiz- und/oder Klimaanlage (1) nach einem der Ansprüche 1 bis 3 **dadurch gekennzeichnet, dass** das zumindest eine Gebläse (5) für die Frischluftzufuhr derart angeordnet ist, dass mit ihm nur Frischluft förderbar ist, und dass wenigstens ein weiteres Gebläse (7) nur zum Fördern von Umluft bezüglich eines Fahrzeuginnenraums (53) vorgesehen ist.

5. Heiz- und/oder Klimaanlage (1) nach einem der Ansprüche 1 bis 4 **dadurch gekennzeichnet, dass** die Motoren (13, 31) des wenigstens einen Gebläses (5) für die Frischluftzufuhr und der wenigstens einen Abluftfördereinrichtung (25) jeweils elektrisch betreibbar und in ihrer Drehzahl regelbar ausgebildet sind.

6. Heiz- und/oder Klimaanlage (1) nach einem der Ansprüche 1 bis 5 **dadurch gekennzeichnet, dass** sie derart ausgebildet ist, dass die Größe des durchströmbaren Querschnitts für die Frischluftzufuhr durch die Frischluftleitung/en (19) und/oder die Größe des durchströmbaren Querschnitts für die Abluft durch die Abluftleitung/en (23) variierbar ist/sind.

7. Heiz- und/oder Klimaanlage (1) nach einem der Ansprüche 1 bis 6 **dadurch gekennzeichnet, dass** der wenigstens eine erste Wärmetauscher (21) zueinander benachbarte durch eine gemeinsame ein wärmeleitendes Material aufweisende Wand (65) voneinander getrennte Kanäle (61, 63), wovon jeweils der eine Kanal (63) für das Leiten von Frischluft und der andere Kanal (61) für das Leiten von Abluft vorgesehen ist, umfasst.

8. Heiz- und/oder Klimaanlage (1) nach Anspruch 7 **dadurch gekennzeichnet, dass** die zwei oder mehr Kanäle (61, 63) mit ihren Längsachsen parallel zueinander liegen sowie die jeweiligen Querschnitte der Kanäle (61, 63) senkrecht zur Längsachse gleichgroß rechteckig vorzugsweise quadratisch oder dreieckig geformt und karomusterartig zueinander in der Weise angeordnet sind, dass bezüglich ihren jeweiligen Seiten keine Kanäle (63) für das Leiten von Frischluft aneinander grenzen sowie keine Kanäle (61) für das Leiten von Abluft aneinander grenzen.

9. Heiz- und/oder Klimaanlage (1) nach einem der Ansprüche 1 bis 7 **dadurch gekennzeichnet, dass** die zum Leiten von Abluft und die zum Leiten von Frischluft vorgesehenen Kanäle (61, 63) des ersten Wärmetauschers (21) schichtweise im Wechsel zwischen zum Leiten von Abluft und zum Leiten von Frischluft aneinander angeordnet sind.

10. Heiz- und/oder Klimaanlage (1) nach Anspruch 9 **dadurch gekennzeichnet, dass** die Kanäle (63) vorgesehen zum Leiten von Frischluft bezüglich der Strömungsrichtung von Frischluft zueinander parallel angeordnet und derart hinsichtlich ihrer Längsausdehnung in Größe und im Winkel zu den für die Abluft vorgesehenen-Kanälen (61) ausgebildet sind, dass ihre Einlassöffnungen (67) an einer ersten Seite (69) und ihre Auslassöffnungen (71) an einer zweiten Seite (73) und die Einlassöffnungen (75) für das Leiten von Abluft vorgesehenen Kanäle (61) an einer dritten Seite (77) und deren Auslassöffnungen (79) an einer vierten Seite (81) des ersten Wärmetauschers (21) angeordnet sind.

11. Heiz- und/oder Klimaanlage (1) nach einem der Ansprüche 1 bis 10 **dadurch gekennzeichnet, dass** der vertikale Querschnitt längs der vorgesehenen Strömungsrichtungen von Abluft und Frischluft des ersten Wärmetauschers (21) eine Sechseckform, bei der die sich gegenüberliegenden Seiten parallel zueinander verlaufen, aufweist.

12. Heiz- und/oder Klimaanlage (1) nach einem der Ansprüche 1 bis 11 **dadurch gekennzeichnet, dass** sie in der wenigstens einen Abluftleitung (23) stromabwärts des ersten Wärmetauschers (21) zumindest einen derart ausgebildeten dritten Wärmetauscher zum Wärmetausch zwischen Abluft und einem bei Betrieb in einem Kreislauf zirkulierenden Medium umfasst, dass mit dem dritten Wärmetauscher im Heizbetrieb der Heiz- und/oder Klimaanlage (1) Wärme aus der Abluft und/oder im Klimabetrieb der Heiz- und/oder Klimaanlage (1) Kälte aus der Abluft für den Betrieb der Heiz- und/oder Klimaanlage (1) zurückgewinnbar ist.

13. Heiz- und/oder Klimaanlage (1) nach einem der Ansprüche 1 bis 12 **dadurch gekennzeichnet, dass** sie eine Steuerung (41) zumindest zum Regeln der Frischluftzufuhr durch den wenigstens einen ersten Wärmetauscher (21) und das wenigstens eine für zumindest die Frischluftzufuhr vorgesehene Gebläse (5) und der Abfuhrmenge pro Zeit von Abluft durch den wenigstens einen ersten Wärmetauscher (21) und die wenigstens eine Abluftfördereinrichtung (25) umfasst.

14. Heiz- und/oder Klimaanlage (1) nach einem der Ansprüche 1 bis 13 **dadurch gekennzeichnet, dass** zumindest ihre luftleitenden, ihre luftfördernden und ihre direkt luftbehandelnden Bestandteile in einer zum Positionieren auf oder teilintegriert in einem Fahrzeugdach (51) ausgebildeten Einheit (93) angeordnet sind.

15. Fahrzeug (91), wie vorzugsweise ein Bau- oder Landwirtschafts- oder Straßen- oder Schienenfahrzeug, mit einer Heiz- und/oder Klimaanlage (1) nach einem der Ansprüche 1 bis 14.

16. Verfahren zum Steuern einer Heiz- und/oder Klimaanlage (1) nach einem der Ansprüche 1 bis 14 bei einem Fahrzeug (91) nach Anspruch 15 **gekennzeichnet durch** die Schritte,
- des Regelns der Frischluftzufuhr (110) durch den wenigstens einen ersten Wärmetauscher (21) und das wenigstens eine zumindest für die Frischluftzufuhr vorgesehene Gebläse (5), und
- des Regelns der Abfuhrmenge pro Zeit (120) von Abluft durch den wenigstens einen ersten Wärmetauscher (21) und die wenigstens eine Abluftfördereinrichtung (25).

## Claims

1. Heating and/or air-conditioning system (1) for a vehicle (91), which comprises at least one fresh-air-supply line (19) for conducting fresh air for a vehicle interior (53), at least one blower (5) arranged at least for conveying fresh air through at least one of the at least one fresh-air-supply line (19), at least one exhaust-air line (23) for conducting exhaust air out of a vehicle interior (53), and at least one exhaust-air-conveying device (25), arranged for conveying exhaust air through at least one of the at least one exhaust-air line (23) and outwards into the environment, wherein the heating and/or air-conditioning system (1) comprises at least one first heat exchanger (21) which is arranged both in or as a constituent part of at least one of the at least one fresh-air-supply line (19) and in or as a constituent part of at least one of the at least one exhaust-air line (23), is designed as an air-air heat exchanger and is intended for exchanging heat between fresh air and exhaust air, and at least one second heat exchanger (27) for exchanging heat between fresh air and a medium circulating in a circuit during operation is arranged in the fresh-air-supply line (19) downstream of the first heat exchanger (21) in such a manner that it is provided in respect of the air treatment for heating and/or cooling only the fresh air, **characterized**
**in that** the heating and/or air-conditioning system (1) comprises at least one further heat exchanger (37, 39) which is arranged only in a circulation-air line (33), which is spatially separated from the fresh-air supply line (19), and is designed for cooling and/or heating circulation air.

2. Heating and/or air-conditioning system (1) according to Claim 1, **characterized in that** the at least one second heat exchanger (27) is configured to be switchable between cooling and heating the fresh air.

3. Heating and/or air-conditioning system (1) according to Claim 1 or 2, **characterized in that** it comprises a refrigerant circuit (28) with compressor (30), condenser/gas cooler, expansion element (24) and evaporator that is designed to be switchable between heat-pump operation for heating and air-conditioning operation for cooling.

4. Heating and/or air-conditioning system (1) according to one of Claims 1 to 3, **characterized in that** the at least one blower (5) for the fresh-air supply is arranged in such a manner that only fresh air can be conveyed by it, and **in that** at least one further blower (7) is provided only for conveying circulation air with respect to a vehicle interior (53).

5. Heating and/or air-conditioning system (1) according to one of Claims 1 to 4, **characterized in that** the motors (13, 31) of the at least one blower (5) for the fresh-air supply and of the at least one exhaust-air-conveying device (25) are designed to be each electrically operable and controllable in their rotational speed.

6. Heating and/or air-conditioning system (1) according to one of Claims 1 to 5, **characterized in that** it is designed in such a manner that the size of the through-flowable cross section for the fresh-air supply through the fresh-air line(s) (19) and/or the size of the through-flowable cross section for the exhaust air through the exhaust-air line(s) (23) are/is variable.

7. Heating and/or air-conditioning system (1) according to one of Claims 1 to 6, **characterized in that** the at least one first heat exchanger (21) comprises mutually adjacent ducts (61, 63) which are separated from one another by a common wall (65) comprising a heat-conducting material, of which ducts in each case the one duct (63) is provided for conducting fresh air and the other duct (61) for conducting exhaust air.

8. Heating and/or air-conditioning system (1) according to Claim 7, **characterized in that** the two or more ducts (61, 63) lie with their longitudinal axes parallel to one another, and the respective cross sections of the ducts (61, 63) perpendicular to the longitudinal axis are of identically sized rectangular, preferably square or triangular, shape and are arranged in the manner of a chequered pattern with respect to one another in such a manner that, with regard to their respective sides, no ducts (63) for conducting fresh air are adjacent to one another and no ducts (61) for conducting exhaust air are adjacent to one another.

9. Heating and/or air-conditioning system (1) according to one of Claims 1 to 7, **characterized in that** the ducts (61, 63), which are provided for conducting exhaust air and the ducts which are provided for conducting fresh air, of the first heat exchanger (21) are arranged on one another alternating in layers between ducts for conducting exhaust air and ducts for conducting fresh air.

10. Heating and/or air-conditioning system (1) according to Claim 9, **characterized in that** the ducts (63) provided for conducting fresh air are arranged parallel to one another with regard to the direction of flow of fresh air and, in respect of their longitudinal extent, are formed in size and at an angle to the ducts (61) provided for the exhaust air in such a manner that their inlet openings (67) are arranged on a first side (69) and their outlet openings (71) are arranged on a second side (73), and the inlet openings (75) of ducts (61) provided for conducting exhaust air are arranged on a third side (77) and their outlet openings (79) are arranged on a fourth side (81) of the first heat exchanger (21).

11. Heating and/or air-conditioning system (1) according to one of Claims 1 to 10, **characterized in that** the vertical cross section along the envisaged directions of flow of exhaust air and fresh air of the first heat exchanger (21) has a hexagonal shape in which the opposite sides run parallel to one another.

12. Heating and/or air-conditioning system (1) according to one of Claims 1 to 11, **characterized in that** it comprises at least one third heat exchanger in the at least one exhaust-air line (23) downstream of the first heat exchanger (21), which third heat exchanger is provided for exchanging heat between exhaust air and a medium circulating in a circuit during operation and is designed in such a manner that, by way of the third heat exchanger, during the heating operation of the heating and/or air-conditioning system (1), heat is recoverable from the exhaust air, and/or, during the air-conditioning operation of the heating and/or air-conditioning system (1), cold is recoverable from the exhaust air, for the operation of the heating and/or air-conditioning system (1).

13. Heating and/or air-conditioning system (1) according to one of Claims 1 to 12, **characterized in that** it comprises a controller (41) at least for regulating the fresh-air supply through the at least one first heat exchanger (21) and the at least one blower (5), which is provided for at least the fresh-air supply, and the quantity per unit of time of exhaust air removed by the at least one first heat exchanger (21) and the at least one exhaust-air-conveying device (25).

14. Heating and/or air-conditioning system (1) according to one of Claims 1 to 13, **characterized in that** at least its air-guiding, its air-conveying and its directly air-handling constituent parts are arranged in a unit (93) which is designed to be positioned on or partially integrated in a vehicle roof (51).

15. Vehicle (91), such as preferably a construction vehicle or agricultural vehicle or road vehicle or rail vehicle, having a heating and/or air-conditioning system (1) according to one of Claims 1 to 14.

16. Method for controlling a heating and/or air-conditioning system (1) according to one of Claims 1 to 14 in the case of a vehicle (91) according to Claim 15, **characterized by** the steps
- regulating the fresh-air supply (110) by way of the at least one first heat exchanger (21) and the at least one blower (5) provided at least for the fresh-air supply, and
- regulating the quantity per unit of time (120) of exhaust air removed by way of the at least one first heat exchanger (21) and the at least one exhaust-air-conveying device (25).

## Revendications

1. Installation (1) de chauffage et/ou de climatisation pour un véhicule (91), comprenant au moins une conduite (19) d'amenée d'air frais pour diriger de l'air frais vers un habitacle de véhicule (53), au moins un ventilateur (5) agencé pour transporter de l'air frais à travers au moins une parmi ladite au moins une conduite (19) d'amenée d'air frais, au moins une conduite (23) d'évacuation d'air pour guider de l'air à évacuer depuis un habitacle de véhicule (53) et au moins un dispositif (25) de transport d'air à évacuer agencé pour transporter l'air à évacuer à travers au moins une parmi ladite au moins une conduite (23) d'évacuation d'air et vers l'extérieur dans l'environnement, l'installation (1) de chauffage et/ou de climatisation comprenant au moins un premier échangeur de chaleur (21), agencé en tant qu'échangeur de chaleur en air-air aussi bien dans au moins une parmi ladite au moins une conduite (19) d'amenée d'air frais ou en partie intégrante de celle-ci, que dans au moins une parmi ladite au moins une conduite (23) d'évacuation d'air ou en partie intégrante de celle-ci, pour un échange de chaleur entre l'air frais et l'air à évacuer, et au moins un deuxième échangeur de chaleur (27) pour l'échange de chaleur entre l'air frais et un fluide circulant dans un circuit lors du fonctionnement étant agencé dans la conduite (19) d'amenée d'air frais en aval du premier échangeur de chaleur (21), de sorte qu'en ce qui concerne le traitement de l'air, celui-ci n'est prévu que pour le chauffage et/ou le refroidissement de l'air frais, **caractérisée en ce que** l'installation (1) de chauffage et/ou de climatisation comprend au moins un autre échangeur de chaleur (37, 39) agencé uniquement dans une conduite (33) d'air de circulation séparée spatialement de la conduite (19) d'amenée d'air frais et conçu pour refroidir et/ou chauffer l'air de circulation.

2. Installation (1) de chauffage et/ou de climatisation selon la revendication 1, **caractérisée en ce que** ledit au moins un deuxième échangeur de chaleur (27) est aménagé de manière à être apte à être commuté entre le refroidissement et le chauffage de l'air frais.

3. Installation (1) de chauffage et/ou de climatisation selon la revendication 1 ou 2, **caractérisée en ce qu'**elle comprend un circuit (28) de fluide frigorigène avec un compresseur (30), un condenseur/refroidisseur de gaz, un organe de détente (24) et un évaporateur, qui est conçu de manière à être apte à être commuté entre le mode pompe à chaleur pour le chauffage et le mode climatisation pour le refroidissement.

4. Installation (1) de chauffage et/ou de climatisation selon l'une des revendications 1 à 3, **caractérisée en ce que** ledit au moins un ventilateur (5) pour l'amenée d'air frais est agencé de telle sorte qu'il ne permet de transporter que de l'air frais, et **en ce qu'**au moins un autre ventilateur (7) est prévu uniquement pour transporter de l'air de circulation par rapport à un habitacle de véhicule (53).

5. Installation (1) de chauffage et/ou de climatisation selon l'une des revendications 1 à 4, **caractérisée en ce que** les moteurs (13, 31) dudit au moins un ventilateur (5) pour l'amenée d'air frais et dudit au moins un dispositif (25) de transport d'air à évacuer sont chacun aptes à être actionnés électriquement et leur vitesse de rotation est réglable.

6. Installation (1) de chauffage et/ou de climatisation selon l'une des revendications 1 à 5, **caractérisée en ce qu'**elle est conçue de telle sorte que la taille de la section transversale apte à être traversée par l'arrivée d'air frais à travers la ou les conduites (19) d'air frais et/ou la taille de la section transversale apte à être traversée par l'air à évacuer à travers la ou les conduites (23) d'air à évacuer est/sont variable(s).

7. Installation (1) de chauffage et/ou de climatisation selon l'une des revendications 1 à 6, **caractérisée en ce que** ledit au moins un premier échangeur de chaleur (21) comprend des canaux (61, 63) voisins les uns des autres et séparés par une paroi commune (65) présentant un matériau conducteur de chaleur, dont respectivement un canal (63) est prévu pour la conduite de l'air frais et l'autre canal (61) est prévu pour la conduite de l'air à évacuer.

8. Installation (1) de chauffage et/ou de climatisation selon la revendication 7, **caractérisée en ce que** les deux ou plusieurs canaux (61, 63) sont disposés avec leurs axes longitudinaux parallèles l'un à l'autre et **en ce que** les sections transversales respectives des canaux (61, 63) ont, perpendiculairement à l'axe longitudinal, une forme rectangulaire, de préférence carrée ou triangulaire, de même taille, et sont disposés les uns par rapport aux autres à la manière d'un motif en damier de telle sorte que, par rapport à leurs côtés respectifs, aucun canal (63) destiné à conduire de l'air frais n'est adjacent à un autre et qu'aucun canal (61) destiné à conduire de l'air à évacuer n'est adjacent à un autre.

9. Installation (1) de chauffage et/ou de climatisation selon l'une des revendications 1 à 7, **caractérisée en ce que** les canaux (61, 63) du premier échangeur de chaleur (21) prévus pour conduire l'air à évacuer et pour conduire l'air frais sont agencés en couches alternées entre la conduite d'air à évacuer et la conduite d'air frais.

10. Installation (1) de chauffage et/ou de climatisation selon la revendication 9, **caractérisée en ce que** les canaux (63) prévus pour conduire l'air frais sont agencés parallèlement les uns aux autres par rapport à la direction d'écoulement de l'air frais et sont conçus de telle manière, en ce qui concerne leur extension longitudinale en taille et leur angle, par rapport aux canaux (61) prévus pour l'air à évacuer, que leurs ouvertures d'entrée (67) sont agencées sur un premier côté (69) et leurs ouvertures de sortie (71) sont agencées sur un deuxième côté (73), et que les ouvertures d'entrée (75) des canaux (61) prévus pour la conduite de l'air à évacuer sont agencées sur un troisième côté (77) et leurs ouvertures de sortie (79) sont agencées sur un quatrième côté (81) du premier échangeur de chaleur (21).

11. Installation (1) de chauffage et/ou de climatisation selon l'une des revendications 1 à 10, **caractérisée en ce que** la section transversale verticale présente, le long des directions d'écoulement prévues de l'air à évacuer et de l'air frais du premier échangeur de chaleur (21), une forme hexagonale dont les côtés opposés sont parallèles entre eux.

12. Installation (1) de chauffage et/ou de climatisation selon l'une quelconque des revendications 1 à 11, **caractérisée en ce qu'**elle comprend, dans ladite au moins une conduite (23) d'évacuation d'air en aval du premier échangeur de chaleur (21), au moins un troisième échangeur de chaleur configuré de manière à échanger de la chaleur entre l'air évacué et un fluide circulant dans un circuit lors du fonctionnement, **en ce que** le troisième échangeur de chaleur permet, en mode de chauffage de l'installation (1) de chauffage et/ou de climatisation, de récupérer de la chaleur dans l'air évacué et/ou, en mode de climatisation de l'installation (1) de chauffage et/ou de climatisation, de récupérer du froid dans l'air évacué pour le fonctionnement de l'installation (1) de chauffage et/ou de climatisation.

13. Installation (1) de chauffage et/ou de climatisation selon l'une quelconque des revendications 1 à 12, **caractérisée en ce qu'**elle comprend une commande (41) au moins pour réguler la conduite d'air frais à travers ledit au moins un premier échangeur de chaleur (21) et ledit au moins un ventilateur (5) prévu pour au moins la conduite d'air frais, et la quantité d'air évacuée par unité de temps à travers ledit au moins un premier échangeur de chaleur (21) et ledit au moins un dispositif (25) de transport d'air évacué.

14. Installation (1) de chauffage et/ou de climatisation selon l'une des revendications 1 à 13, **caractérisée en ce qu'**au moins ses composants de conduction d'air, de transport d'air et de traitement direct de l'air sont agencés dans une unité (93) conçue pour être positionnée sur un toit de véhicule (51) ou partiellement intégrée dans ce toit.

15. Véhicule (91), tel que de préférence un véhicule de chantier ou agricole ou routier ou ferroviaire, comprenant une installation (1) de chauffage et/ou de climatisation selon l'une quelconque des revendications 1 à 14.

16. Procédé de commande d'une installation (1) de chauffage et/ou de climatisation selon l'une des revendications 1 à 14, dans un véhicule (91) selon la revendication 15, **caractérisé par** les étapes consistant à :
- réguler l'amenée (110) d'air frais à travers ledit au moins un premier échangeur de chaleur (21) et ledit au moins un ventilateur (5) prévu au moins pour l'alimentation en air frais, et
- réguler le débit par unité de temps (120) d'évacuation d'air à évacuer à travers ledit au moins un premier échangeur de chaleur (21) et ledit au moins un dispositif (25) de transport d'air à évacuer.
